# EUROPEAN PATENT APPLICATION

(11) **EP 2 254 089 A1**
(43) Date of publication of application: **24.11.2010**
(21) Application number: 09305449.2
(22) Date of filing: 18.05.2009
(51) Int. Cl.: G06Q 50/00, G06Q 10/00

(54) **Improvements in or relating to a method and system of booking management**

(71) Applicant: Amadeus S.A.S., 06902 Sophia Antipolis (FR)
(72) Inventor: Lebreton, Xavier, 06580 Pegomas (FR); Armand, Maxime, 06600 Antibes (FR)
(74) Representative: Coret, Sophie V.G.A.

(57) **Abstract**

A method of generating an offer for resources, such as a hotel room, which meets a customer request and satisfies at least one customer preferences to a predetermined extent, the method comprising: receiving a customer request for one or more resources meeting one or more requirements; searching for a set of resources which meet one or more of the requirements; determining one or more customer preferences from a set of business rules; determining an order of importance for the one or more customer preferences; applying the most important customer preference to the set of resources to select the resources which satisfies the most important customer preference to a predetermined extent so as to produce a revised set of resources; and creating an offer for presentation to a customer from the revised set of resources such that the customer may select an offer for purchase.

## Description

### Field of the invention

The present invention relates to a method and system of booking management, particularly but not exclusively in the domain booking resources, such as hotel bookings.

### Background of the invention

Hotel booking systems are well known, both though web based applications and by means of travel agents. A request for availability of a hotel room is carried out for the required period of the customer's stay. If there is no hotel with an empty room for the entire period the request result will display any appropriate availability. There is no simple way to book a room other than to search for individual rooms in different hotels for individual days. This is time-consuming and still may result in no availability that meets the requirements of the customer.

US 2007/0 67, 193 discloses the methods the managing reservation requests between a specific hotel and a specific travel agent. The hotel and the travel agents have a specific agreement between each other in order to allocate a specific number of rooms in the hotel to that specific travel agent. In certain situations where reservations exceed availability, the hotel may still accept requests from the specific travel agent by applying special rules. By overbooking in this way, the hotel risks having too many customers wishing to stay on a specific day. Sometimes this can be ameliorated by "no shows", but this is not always the case. Accordingly, the prior art can result in overbooking and dissatisfied customers.

### Objects of the invention

One aspect of the present invention is to overcome at least some of the problems associated with the prior art.

A further object of the present invention is to provide an improved hotel or other resource booking system and method.

### Summary of the invention

The present invention provides a method and system as set out in the accompanying claims.

According to one aspect of the present invention there is provided a method of generating an offer for resources, such as a hotel room, which meets a customer request and satisfies at least one customer preferences to a predetermined extent, the method comprising: receiving a customer request for one or more resources meeting one or more requirements; searching for a set of resources which meet one or more of the requirements; determining one or more customer preferences from a set of business rules; determining an order of importance for the one or more customer preferences; applying the most important customer preference to the set of resources to select the resources which satisfies the most important customer preference to a predetermined extent so as to produce a revised set of resources; and creating an offer for presentation to a customer from the revised set of resources such that the customer may select an offer for purchase.

According to a second aspect of the present invention there is provided an apparatus for generating an offer for resources, such as a hotel room, which meets a customer request and satisfies at least one customer preferences to a predetermined extent, the method comprising: a receiver for receiving a customer request for one or more resources meeting one or more requirements; a search engine for searching for a set of resources which meet one or more of the requirements; a processor for determining one or more customer preferences from a set of business rules and for determining an order of importance for the one or more customer preferences; and a processor for applying the most important customer preference to the set of resources to select the resources which satisfies the most important customer preference to a predetermined extent so as to produce a revised set of resources and creating an offer for presentation to a customer from the revised set of resources such that the customer may select an offer for purchase.

### Brief description of the drawings

Reference will now be made, by way of example, to the accompanying drawings, in which:
Figure 1 is a simple representation of a system, in accordance with an embodiment of the invention, given by way of example,
Figure 2 is a more detailed representation of part of the Figure 1 system, in accordance with an embodiment of the invention, given by way of example,
Figure 3 is a table showing availability in different hotels for a specific stay, in accordance with an embodiment of the invention, given by way of example,
Figure 4 is a decision tree, in accordance with an embodiment of the invention, given by way of example,
Figure 5 is a table showing possible offers, in accordance with an embodiment of the invention, given by way of example,
Figure 6 is a flow chart showing the method steps, in accordance with an embodiment of the invention, given by way of example.

### Detailed description of the preferred embodiments

The present invention relates to a system and method for identifying availability for a stay, particularly if there is no room available in an individual hotel the whole period of the stay. This is accomplished by a request that is controlled by an algorithm in order to determine availability in individual hotels and match this with an overall customer requirement, whilst taking into account customer preferences. These preferences may include a minimum number of moves from one hotel to another or may be associated with costs, facilities or any other preferences.

From the hotel owner's point of view the present invention enables the possibility for rooms to be made available for shorter periods than the whole period of stay of the customer and as a consequence may avoid empty rooms. From the customer's point of view the present invention enables a simple system of finding room availability, even if that availability is in multiple hotels.

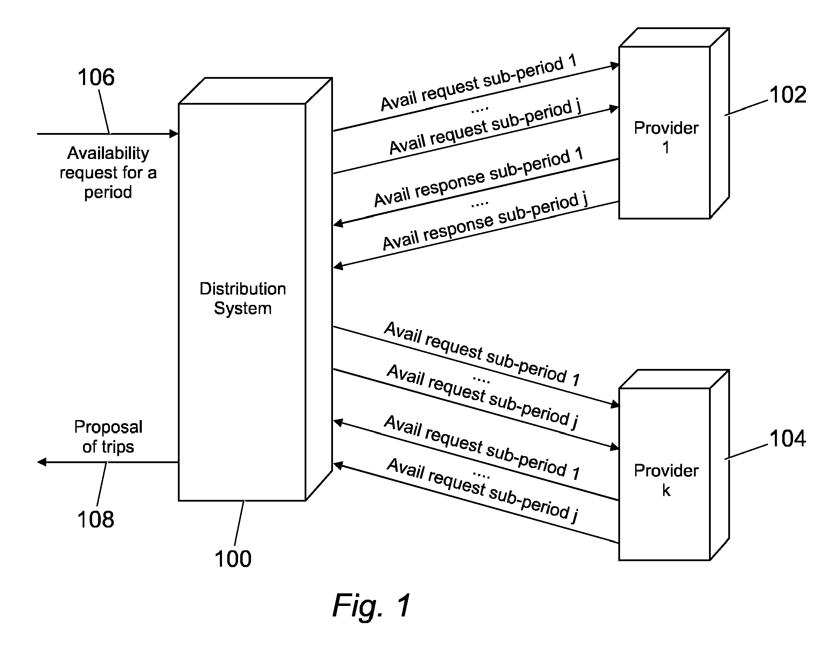

In its broadest sense, the present invention can be explained with reference to figure 1. Figure 1 shows a distribution system 100 in communication with a number of providers, 102 and 104. A customer enters a request 106 seeking availability of a hotel for a given period. The distribution system contacts the different providers in order to determine availability of hotel rooms for the whole period. If availability for the whole period is not possible, the availability of different sub-periods of the whole period will be requested from each of the providers. The combination of sub-periods or days can then be combined in the distribution system to offer the customer a proposal 108 of hotel rooms for the duration of the whole period. The manner in which this takes place will be described in greater detail below.

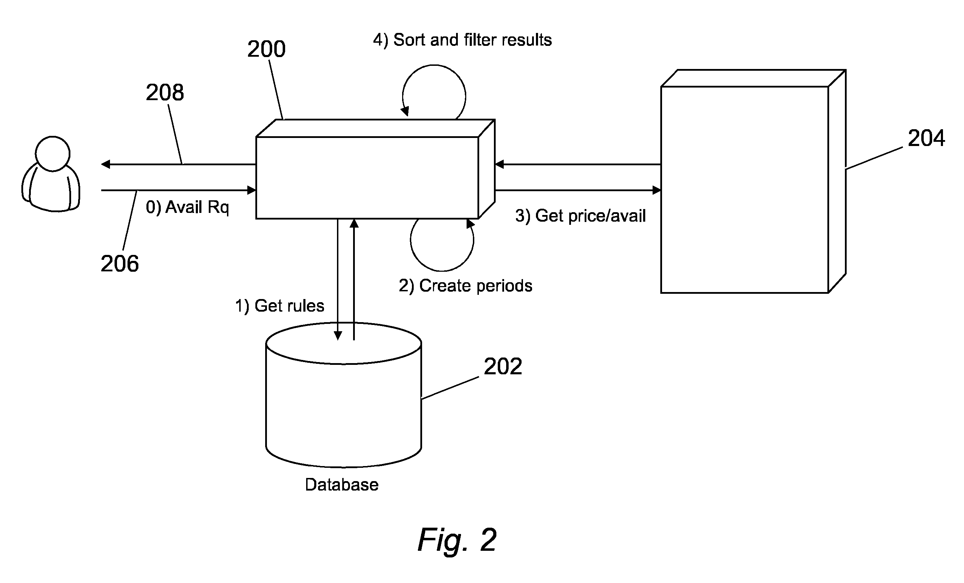

Figure 2 shows more details of the distribution system 100 figure 1. The distribution system includes a processor 200, in the form of high-level operations software (HOS), a database 202 and a cache 204. A request 206 is made by a customer and received at the processor 200. The database is accessed in order to obtain business rules and other rules associated with the request made by the customer. The cache 204 receives data from the various providers (not shown) in response to the request, in respect of price and availability of hotel rooms associated with the request, made by the customer. The processes then determines one or more offers which are sent (208) to the client.

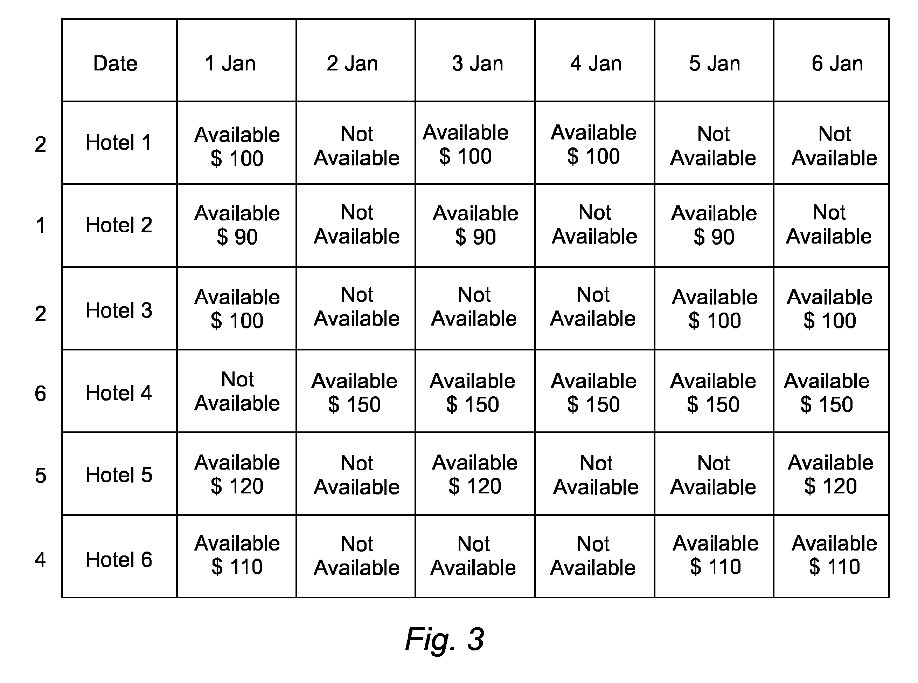

Referring now to figure 3, a table showing hotel availability and price for a specific time period is shown. The period of time is from 1^{st} January to the 6^{th} January and relates to a trip to a specific location. The table shows a variety of hotels in this case hotel 1, hotel 2, hotel 3, hotel 4, hotel 5 and hotel 6. None of the hotels have availability for the whole period of the stay. In addition, certain days during the stay have fairly limited hotel availability for example, 2^{nd} and 4^{th} January each have only one or two available hotels. The 2^{nd} January only hotel 4 is available and the 4^{th} January only hotel 4 and hotel 1 are available.

The table shows a small cross-section of hotel availability, although in reality there may be many more hotels and many more considerations than merely to their availability or cost. Accordingly, in order to determine availability and a possible offer to present to the customer in response to the request, it is necessary to analyze the content of the table to determine the offer. The analysis is an important element of the present invention and is driven by an algorithm and appropriate business rules. These will now be described in greater detail.

When preparing a possible offer for a customer it is essential that the offer includes accommodation for each day of the stay. Accordingly, the first process in the search is to eliminate any hotels which have no availability on any day in the requested period. If a hotel has availability on at least one day in the period, this hotel may be used for the next step and is entered into a database for further consideration. The customer has specific preferences or a set of business rules which indicates the customer preferences. These customer preferences may be indicated as discrete values or answers, or alternatively be in the form of a continuum which weights the customer preferences. The customer preferences may be entered as part of the request or be part of a set of stored business rules, through for example a loyalty scheme.

By way of example, the customer preferences may relate to price, hotel facilities, the requirement not to change hotels, and/or any combination of these or any other potential customer preferences.

As mentioned above, all available hotels having at least one day availability during the period of the request are stored in an appropriate location, such as a database. The contents of the database are then processed in accordance with the business rules and preferences of the customer in order to determine a possible offer which accommodates the customer request. The first step in this request is to determine which customer preferences are of greatest importance. For example, a customer may have a particular preference for finding an offer which is the cheapest possible, irrespective of any other compromise that the customer may have to make. Another customer may require an offer where hotel changes are minimized. Changing hotels is required as there is no hotel which can satisfy the whole requested period and so changing hotel is inevitable, although the customer may have differing degrees of tolerance to a change in hotel as may be indicated in the business rules.

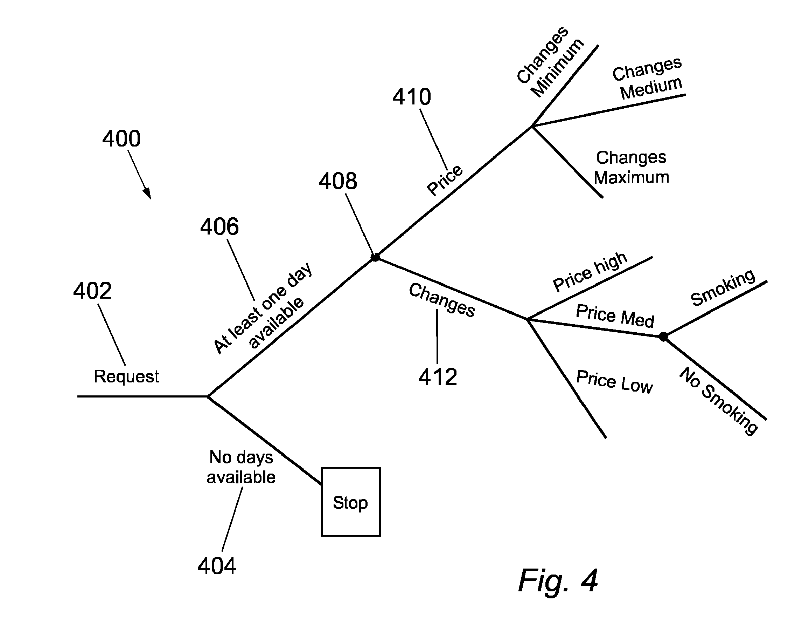

Referring to figure 4 a decision tree 400 for determining an appropriate offer is shown. An incoming request 402 is received and results in a search being carried out. The search results are stored either in a database or in a temporary location to be updated as the decision tree process proceeds. The first decision in the decision tree is to determine hotels with no available rooms on any day of the stay. Any hotel with no available days (404) will not be considered further in the process. Any hotel which has at least one available day during the time period of the stay (406) will be entered into the database (if not already there) for future processing. At the next decision point, 408 the customer preferences are taken into account. For example if the most important customer preference for the customer in question is price the process will proceed along the decision tree towards 410 and if minimizing the number of hotel changes is the primary preference the process will proceed towards 412.

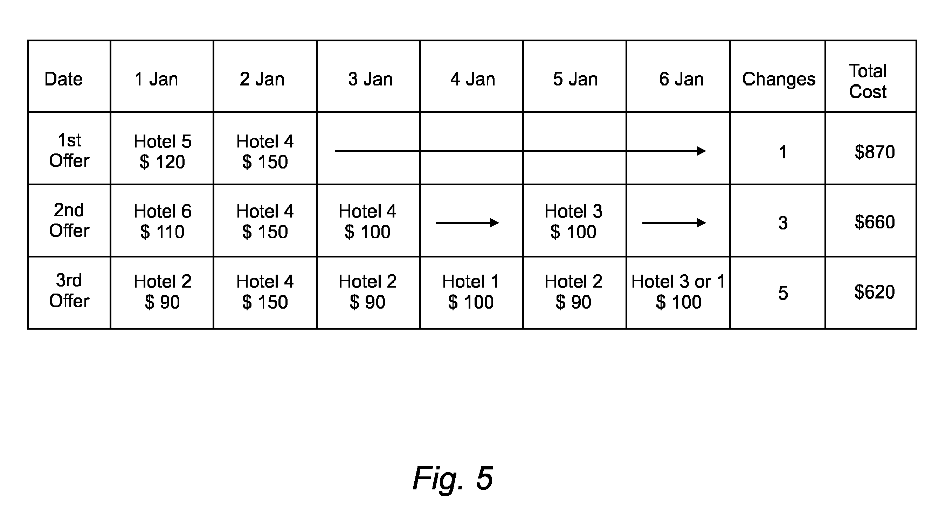

Referring initially to the situation where price is the primary preference of the customer, the hotel listings as shown in figure 3 are analyzed in order to find the cheapest hotel for each day of the stay. The hotels which are available for each day are stored in a database in increasing order of price and for each day the cheapest available price is selected to be entered into a possible offer for the customer. Based on the table in figure 3 a possible offer which satisfies a minimum pricing preference is shown as the third offer in the table of figure 5. The customer preferences may include a degree of flexibility so that more than one offer is made, for example the very lowest price for the stay, along with the second and third lowest prices may be presented to the customer. In addition, if there is more than one offer at the same lowest price the offer may be reanalyzed by applying a second customer preference as will be described in greater detail below. If there is no second customer preference the cheapest price options are offered to the customer for selection. As can be seen in the example of the third offer in figure 5 this offer requires that the customer changes hotel every night. This is a compromise this customer is prepared to make in order to have the lowest priced option and as specified in the customer preferences.

Depending on the number of hotels in the original list as shown in figure 3, there may be a number of different offers which satisfy the lowest price requirements of the customer preference. If there are variations in the price the lowest price will be shown as the first offer and other offers will be shown subsequently. If there are a lot of offers which satisfy the lowest price requirements of the customer preference, it may be necessary to analyze the results in respect of a second customer preference as previously indicated.

Once the list of the first offers has been created the results may be analyzed in respect of the second customer preference, such as the number of hotel changes associated with each offer. For example as shown in figure 4, it may be possible to reorganize the list in terms of minimum number of changes, medium number of changes and maximum number of changes. In this way the customer can select a low price option with a minimum number of changes if that is the customer preference. Instead of changes, other preferences may be used for the second analysis. For example, the facilities available at the hotel such as, a gym, swimming pool etc, which may influence the customer choice. In other words, the best hotel for the minimum price may be more attractive to the customer.

Subsequent analyses may also be based on the third, fourth and fifth preferences and it will be appreciated there is no limit to the number of preferences, although it may not be necessary to use all preferences all of the time. It will also be appreciated, that in different situations the preferences may be ranked in a different order. For example if the customer is traveling alone the preferences may be in one order, whilst if the customer is traveling with a spouse the preferences may be in a different order.

Having concluded the various analyses of hotel availability, pricing and other preferences, one or more final offers are put together for presentation to the customer which meet the original request and satisfy the customer preferences in at least a predetermined respect. The customer may then select a preferred one of the offers for purchase. The purchase and subsequent actions associated with the purchase will continue as in any purchase system.

Returning now to point 408 in the decision tree, if the customer has a primary preference not to change hotels the analysis of the hotel lists will proceed in a different manner. In this case a search will be carried out to identify hotels having a maximum number of consecutive available days during the period of the stay. In the example shown in figure 3, hotel 4 has five consecutive available days, leaving only one day where the customer must stay in another hotel. Accordingly, if minimum changing is the customer first preference, hotel 4 will be first in the list to produce the offer. In order to complete the offer a hotel must be identified for the remaining day or days of the stay. In the example shown in figure 3, any of the other hotels are available to complete the offer for the customer. The hotel which is selected may be based on the second preference for this customer. For example the second preference of this customer may be minimum prices and so hotel 2 at €90 will be selected as the most favorable.

In the example in figure 3, there are not many other options where consecutive days are available. There are several hotels with two day availability and an offer can be made up as shown in the second offer of figure 5 which is lower in costs but includes more hotel changes. Depending on the weighting of the preferences of the customer with respect to the preferences, the second offer may be offered above the third offer for certain customers. The combination of preference and weighting thereof, will dictate the order in which offers are presented to the customer.

Returning to figure 4, after the analysis relating to changes 412, further analyses may be carried out. These may relate to price 414 or any other appropriate preference. If there are multiple hotels available with the same number of changes, the price (the second most important) preference of the customer will dictate the order in which offers are produced and presented to the customer.

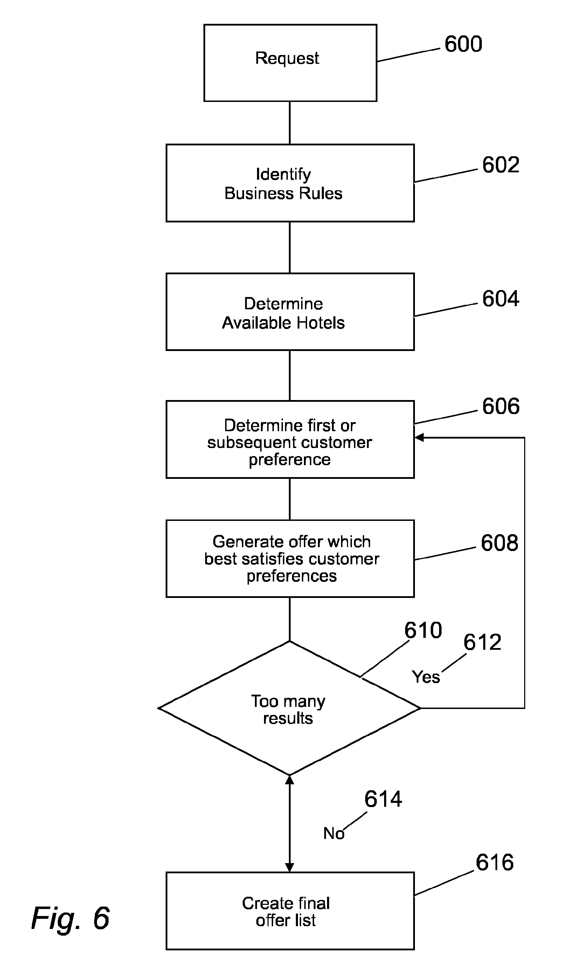

Referring now to figure 6, a flow chart of the method steps that are associated with the present invention will be described. At step 600 a request is received from the customer. At step 602 the system identifies business rules associated with the customer or the request. A list of potentially available hotels is determined at step 604. At step 606 a first (or subsequent) customer preference is identified which will be the basis on which the list of hotels will be analyzed in order to satisfy the request in accordance with the business rules. The business rules include the customer preferences. As described above an offer is generated (608) which best satisfies the customer preference determined at step 606. Depending on the size of the original list of hotels there may in fact be a number of offers which satisfy the request and business rules. Accordingly at step 610, a determination is made as to whether or not an appropriate number of results have been offered. If there are too many results (yes; 612) the process will return to step 606. At this point a subsequent customer preference will be identified from the business rules and in step 608 a further analysis of the current results will be carried out in order to generate an offer which satisfies the subsequent customer preference. In fact the output will of course satisfy both the first and subsequent customer preferences having already been processed for the first. Again step 610 is repeated and if necessary steps 606 and 608 may be carried out for a third preference. In fact the loop may continue until the determination at step 610 confirms that there are not too many results (no, 614). Finally at step 616 a final offer list is created the presentation to the customer.

This invention has been described with reference to the hotel bookings, particularly when no hotels are available from the full duration of the stay. It will be appreciated booking other resources in other environments may require similar solutions to similar problems and use of the present invention may be appropriate for many other resources.

The present invention may be implemented in software, hardware or any combination thereof. In the description where elements are referred to as software they may be implemented by an equivalent hardware module. Similarly, where elements are referred to as hardware module is what elements may be implemented by an equivalent software application or program.

It will be appreciated that this invention may be varied in many different way and still remain within the intended scope and spirit of the invention.

## Claims

1. A method of generating an offer for resources, such as a hotel room, which meets a customer request and satisfies at least one customer preferences to a predetermined extent, the method comprising:
- receiving a customer request for one or more resources meeting one or more requirements;
- searching for a set of resources which meet one or more of the requirements;
- determining one or more customer preferences from a set of business rules;
- determining an order of importance for the one or more customer preferences;
- applying the most important customer preference to the set of resources to select the resources which satisfies the most important customer preference to a predetermined extent so as to produce a revised set of resources;
- creating an offer for presentation to a customer from the revised set of resources such that the customer may select an offer for purchase.

2. The method as claimed in claim 1, further comprising:
- determining the number of revised sets of resources in the offer and if this is above a predetermined value;
- applying a second most important customer preference to the revised set of resources to select the resources which satisfies the second most important customer preference to s predetermined extent so as to produce a further revised set of resources;
- creating an offer for presentation to a customer from the further revised set of resources.

3. The method as claimed in claim 2, further comprising determining the number of further revised sets of resources in the offer and if this is above the predetermined value repeating the steps for subsequent most important customer preferences.

4. The method as claimed in any preceding claim, further comprising selecting the predetermined value to be a number of offers which can be displayed on a screen.

5. The method as claimed in any preceding claim, further comprising storing the set of resources, the revised set of resources and the further revised set of resources in a database.

6. The method as claimed in any preceding claim, wherein the application of the most important customer preference comprises searching the resources for those which best match the most important customer preference and generating a list of such resources in order of their degree of match.

7. The method as claimed in any preceding claim, further comprising selecting different resources for different requirements to thereby form the sets of resources.

8. The method as claimed in any preceding claim, further comprising identifying there is not a single resources that matches at least one requirement.

9. The method as claimed in any preceding claim, further comprising generating an offer such that the resource for each requirement which best matches the customer preference, relative to all other resources that meet the requirement, is that which is selected for inclusion in the offer.

10. A computer program comprising instructions for carrying out the method of any of claims 1 or 9, when said computer program is executed on a programmable apparatus.

11. Apparatus for generating an offer for resources, such as a hotel room, which meets a customer request and satisfies at least one customer preferences to a predetermined extent, the method comprising:
- a receiver for receiving a customer request for one or more resources meeting one or more requirements;
- a search engine for searching for a set of resources which meet one or more of the requirements;
- a processor for determining one or more customer preferences from a set of business rules and for determining an order of importance for the one or more customer preferences;
- a processor for applying the most important customer preference to the set of resources to select the resources which satisfies the most important customer preference to a predetermined extent so as to produce a revised set of resources and creating an offer for presentation to a customer from the revised set of resources such that the customer may select an offer for purchase.
